Europäisches Patentamt

European Patent Office

Office européen des brevets

(19)

(11) Veröffentlichungsnummer: **0 210 396 B1**

# EUROPÄISCHE PATENTSCHRIFT

(45) Veröffentlichungstag der Patentschrift: **13.05.92**

(51) Int. Cl.⁵: **H04B 7/26**

(21) Anmeldenummer: **86108081.0**

(22) Anmeldetag: **13.06.86**

(54) **Verfahren zur Ortsbestimmung von Mobilstationen.**

(30) Priorität: **02.08.85 DE 3527728**

(43) Veröffentlichungstag der Anmeldung:
**04.02.87 Patentblatt 87/06**

(45) Bekanntmachung des Hinweises auf die
Patenterteilung:
**13.05.92 Patentblatt 92/20**

(84) Benannte Vertragsstaaten:
**DE FR GB IT NL SE**

(56) Entgegenhaltungen:
**EP-A- 0 037 070**

**ONDE ELECTRIOUE, Band 64, Nr. 3, Mai/Juni
1984, Seiten 14-21, Argentin-sur-Creuse, FR;
M. DIACRE: "Principaux systèmes de téléphonie mobile cellulaires analogiques"**

**NACHRICHTEN ELEKTRONIK + TELEMATIK,
Band 38, Nr. 7, Juli 1984, Seiten 264-268,
Heidelberg, DE; M. BÖHM: "Mit Digitaltechnik
zum Mobiltelefon für alle"**

(73) Patentinhaber: **ANT Nachrichtentechnik GmbH
Gerberstrasse 33
W-7150 Backnang(DE)**

(72) Erfinder: **Sperlich, Josef, Dipl.-Ing.
Kelterweg 52
W-7150 Backnang(DE)**

**Beschreibung**

Die vorliegende Erfindung betrifft ein Verfahren zur Ortsbestimmung von Mobilstationen innerhalb eines zellularen Mobilfunknetzes, in dem jeder Funkzelle eine mit den Mobilstationen Signale austauschende Feststation zugeordnet ist, wobei von allen Feststationen, welche zu derjenigen gerade mit einer zu ortenden Mobilstation in Verbindung stehenden Feststation benachbart sind, die Empfangsqualität von Signalbursts gemessen wird, die von der betreffenden Mobilstation ausgesendet worden sind, und dann von den diese Signalbursts mit ausreichender Qualität empfangenden Nachbarfeststationen Signallaufzeitmessungen durchgeführt werden, wonach die Mobilstation an diejenige Feststation übergeben wird, für welche die geringste Signallaufzeit zwischen ihr und der Mobilstation ermittelt worden ist.

Ein derartiges Verfahren ist aus der EP 0 037 070 B1 bekannt, das ebenfalls zur Ortsbestimmung von Mobilstationen auf Empfangssignalqualitäts- und Signallaufzeitmessungen beruht. Erst die Signallaufzeitmessungen ergeben eine zuverlässige und eindeutige Auskunft darüber, auf welche Funkzelle sich eine Mobilstation zubewegt, so daß dann die Mobilstation an die Feststation dieser Funkzelle umgeschaltet werden kann.

Der Erfindung liegt nun die Aufgabe zugrunde, ein Verfahren der eingangs genannten Art anzugeben, mit dem die Signallaufzeiten zwischen Feststationen und einer zu ortenden Mobilstation bestimmt werden können, ohne daß dazu die Nutzsignalverbindung dieser Mobilstation mit einer Feststation unterbrochen werden muß oder beeinträchtigt wird.

Erfindungsgemäß wird diese Aufgabe durch die im Kennzeichen des Patentanspruchs 1 aufgeführten Merkmale gelöst.

Zweckmäßige Weiterbildungen der Erfindung gehen aus den Unteransprüchen hervor.

Anhand eines in der Zeichnung dargestellten Ausführungsbeispiels wird nachfolgend die Erfindung näher erläutert.

Fig. 1     zeigt mehrere in Gruppen zusammengefaßte Funkzellen und

Fig. 2     zeigt eine Übersicht der zwischen einer Mobilstation und mehreren Feststationen ausgetauschten Signalkanäle.

In zellularen Mobilfunksystemen werden Mobilstationen, wenn sie während einer bestehenden Verbindung mit der Feststation einer Funkzelle das Versorgungsgebiet einer benachbarten Funkzelle erreichen, automatisch an die Feststation dieser Nachbarfunkzelle übergeben, sofern diese noch Sende-und Empfangskanäle frei hat.

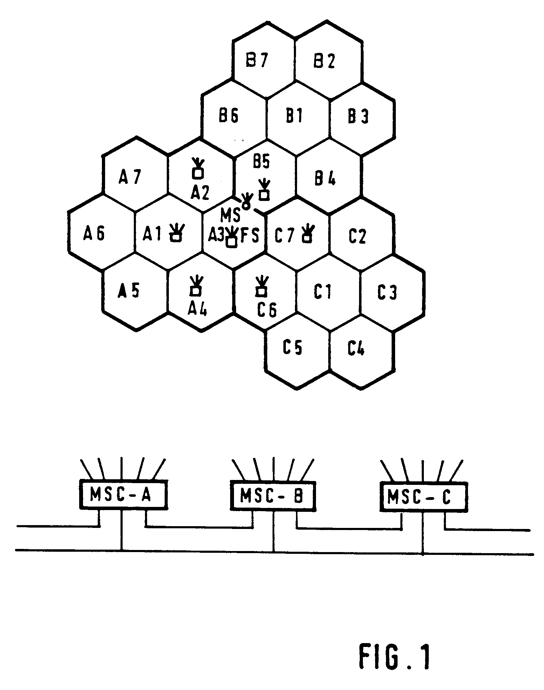

Die Fig. 1 zeigt ein übliches zellulares Mobilfunknetz, dessen Funkzellen in Gruppen A, B und C zusammengefaßt sind. Dabei gehören zur Gruppe A die Funkzellen A1 ... A7, zur Gruppe B die Funkzellen B1 ... B7 und zur Gruppe C die Funkzellen C1 ... C7. Jeder Funkzelle ist eine mit den Mobilstationen verkehrende Feststation zugeordnet. Die zu einer Funkzellengruppe A, B bzw. C gehörenden Feststationen sind jeweils mit einer Funkvermittlungsstelle MSC-A, MSC-B bzw. MSC-C verbunden. Diese Funkvermittlungsstellen MSC-A, MSC-B und MSC-C stehen untereinander über ein terrestrischen Netz (Daten und/oder Fernsprechnetz) in Verbindung. Somit können zwischen allen Feststationen des gesamten Mobilfunknetzes Informationen ausgetauscht werden. Außerdem werden über die Funkvermittlungsstellen die Verbindung von Mobilstationen zu Teilnehmern am terrestrischen Netz oder zu anderen Mobilstationen hergestellt.

In der Fig. 1 ist als Beispiel dargestellt, daß sich eine Mobilstation MS, welche augenblicklich noch mit der Feststation FS der Funkzelle A3 in Verbindung steht, sich der Zellgrenze in Richtung der Nachbarfunkzelle B5 nähert. Sobald die Mobilstation MS die Zellgrenze überschritten hat, müßte sie auf die Feststation der Funkzelle B5 umschalten.

Anschließend soll ein Verfahren beschrieben werden, nach dem der Ort einer Mobilstation, also diejenige Funkzelle auf die die Mobilstation sich zubewegt und in Kürze hineinfahren wird, ermittelt werden kann.

Für die Signalübertragung zwischen Mobilstationen und Feststationen ist ein in ein Unterband und in ein Oberband aufgeteilter Frequenzbereich vorgesehen. Im Unterband werden beispielsweise die Signale von den Mobilstationen zu den Feststationen und im Oberband die Signale von den Feststationen zu den Mobilstationen übertragen. Dabei sind das Unter- und das Oberband in jeweils mehrere Teilfrequenzbänder unterteilt. Je ein Teilfrequenzband gleicher Ordnungszahl im Unter- und im Oberband steht für ein Zeitmultiplexsystem mit Vielfachzugriff (TDMA-System) zur Verfügung. Ein solches TDMA-System besteht aus mehreren in Überrahmen zusammengefaßten Rahmen, von denen jeder mehrere blockweise aneinandergereihte Signalkanäle enthält.

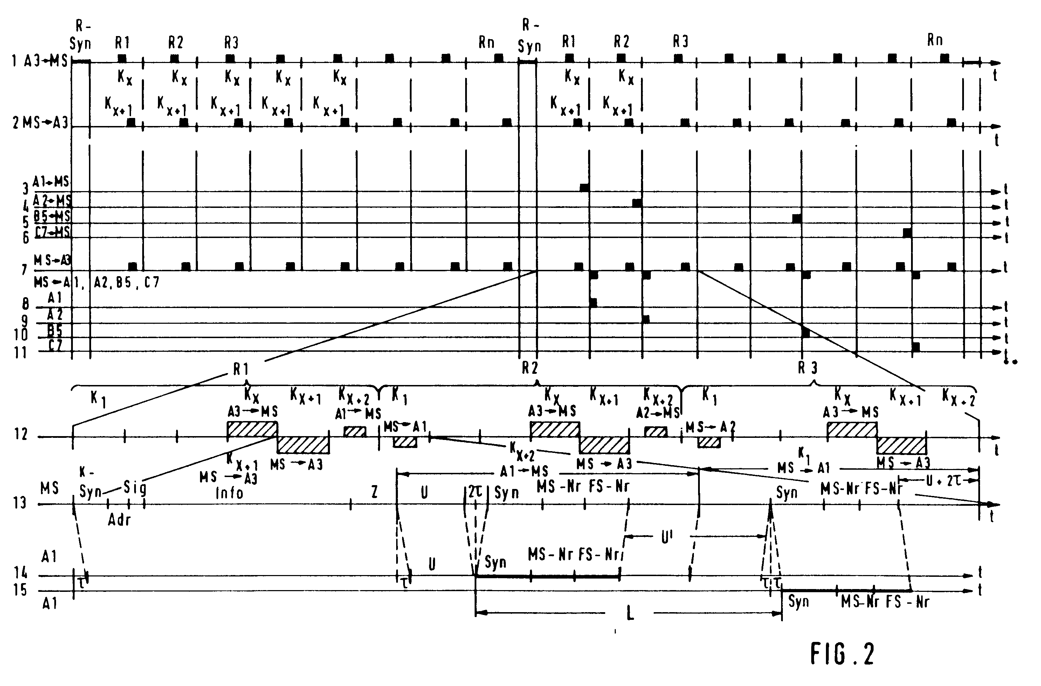

Die Zeilen 1 und 2 der Übersicht in Fig. 2 zeigen den Rahmenaufbau eines TDMA-Systems, wobei zu einem mit einem Rahmensynchronwort R-Syn beginnenden Überrahmen n Rahmen R1 ... Rn gehören. Wie der Zeile 1 zu entnehmen ist, ist von allen z.B. von der Feststation der Funkzelle A3 in den Rahmen R1 ... Rn ausgesendeten Signalkanälen der Signalkanal $K_x$ für die Mobilstation MS bestimmt. Nur diesen Kanal $K_x$ wertet die Mobilsta-

tion aus und setzt in Gegenrichtung ihre Information burstweise in einem, dem Empfangssignalkanal $K_x$ folgenden Signalkanal $K_{x+1}$, wie die Zeile 2 verdeutlicht, an die Feststation ab. Der Mobilstation werden also für eine Verbindung mit einer Feststation im Frequenzbereich zwei bestimmte Teilfrequenzbänder und im Zeitbereich ein bestimmter Signalkanal innerhalb der Rahmen zugewiesen. Teilfrequenzbänder, die der Feststation z.B. der Funkzelle A3 zugeteilt sind, dürfen erst wieder von den Feststationen der Funkzellen B3 und C3 in den anderen Funkzellenbündeln A und B belegt werden.

Erkennt nun im vorliegenden Beispiel die Feststation der Funkzelle A3 aufgrund der Laufzeit der zwischen ihr und der Mobilstation übertragenen Signalbursts, daß die Mobilstation an der Funkzellengrenze angelangt ist, so werden alle Feststationen der die Funkzelle A3 direkt umgebenden Nachbarfunkzellen A1, A2, B5, C7, C6 und A4 über die Funkvermittlungsstellen MSC-A, MSC-B und MSC-C aufgefordert, Empfangssignalqualitätsmessungen der von der Mobilstation ausgesendeten Signalbursts durchzuführen. Dazu wird vorher den Nachbarfeststationen eine Kennung der betreffenden Mobilstation mitgeteilt, welche z.B. ein alphanumerisches Landeskennzeichen, die Teilnehmernummer der Mobilstation und die Nummern der Teilfrequenzbänder und der Signalkanäle enthält, in denen die Mobilstation ihre Signalburst aussendet.

Nach Mitteilung der Kennung versuchen sich in den Nachbarfeststationen vorhandene Meßempfänger auf die von der Mobilstation ausgesendeten Signalbursts aufzusynchronisieren, wobei den Feststationen die Zählweise der Rahmen durch ein von der Mobilstation in einem Adreßteil eines Signalkanals $K_{x+1}$ im ersten Rahmen R1 des Überrahmens angegebenen Zeichens (z.B. eine Alpha-Zeichen) mitgeteilt wird, während jeweils in dem Adreßteil der Signalkanäle $K_{x+1}$ der anderen Rahmen R2 ... Rn z.B. die Teilnehmernummer der Mobilstation übertragen wird. Solche Feststationen, welche die Signalbursts mit zu schlechter Qualität empfangen, melden dies ihrer Funkvermittlungsstelle und nehmen an der nun durchzuführenden Signallaufzeitermittlung nicht mehr teil.

Die Meßempfänger der übrigen Nachbarfeststationen schalten, nachdem sie sich auf die von der Mobilstation ausgesendeten Signalbursts aufsynchronisiert haben, auf ein anderes Teilfrequenzband um. Dieses ist das erste von zwei im Unter- bzw. Oberband liegenden Frequenzbändern, die allen Feststationen des gesamten Mobilfunknetzes und allen Mobilstationen bekannt sind und nur zum Aussenden und Empfangen von Meßsignalen für die Ermittlung der Signallaufzeiten bestimmt sind.

In diesem ersten Teilfrequenzband senden nun in den Nachbarfeststationen vorhandene Meßsender Meßsignalburst aus, und zwar jeweils in einem Signalkanal des TDMA-Systems, der unmittelbar auf den Signalkanal folgt, in dem die Meßempfänger der Nachbarfeststationen vorher die von der Mobilstation ausgesendeten Signalbursts empfangen haben. Diesen Sachverhalt verdeutlichen die Zeilen 2 - 6. Die Zeile 2 zeigt nämlich die Lage der Signalkanäle $K_{x+1}$ in den TDMA-Rahmen R1 ... Rn, in denen die Mobilstation MS ihre Signalbursts aussendet, welche die Nutzinformation für die Feststation der Funkzelle A3 enthalten und gleichzeitig von den Feststationen der Nachbarfunkzellen z.B. A1, A2, B5, C7 zu Empfangsqualitätsmessungen ausgenutzt werden. Die Lage der um einen Zeitschlitz gegenüber diesen Signalkanälen $K_{x+1}$ versetzten Signalkanäle, in denen die Feststationen der Nachbarfunkzellen A1, A2, B5, C7 ihre Meßsignalbursts absetzen, geht aus den Zeilen 3 - 6 hervor. Dabei werden, wie die Zeilen 3 - 6 ebenfalls zeigen, von den Nachbarfeststationen die Meßsignalbursts nur in Rahmen R1 ... Rn gesendet, deren Nummer mit der Funkzellennummer der Nachbarfeststationen übereinstimmt (A1 - R1, A2 - R2, B5 - R5, C7 - R7).

Auf Anweisung von einer Funkvermittlungsstelle MSC-A, MSC-B oder MSC-C schaltet die Mobilstation MS, nachdem sie ihre für die Feststation der Funkzelle A3 bestimmten Signalbursts ausgesendet hat, auf das erwähnte erste Frequenzteilband zum Empfang der von den Nachbarfeststationen abgegebenen Meßsignalbursts um. Anschließend schalten die Mobilstation und die Nachbarfeststationen auf ein zweites Frequenzteilband um, in dem die Mobilstation die Meßsignalbursts zurücksendet und diese von den einzelnen Nachbarfeststationen empfangen werden. Die Rückübertragung der Meßsignalbursts von der Mobilstation MS zu den Feststationen der Nachbarfunkzellen A1, A2, B5, C7 erfolgt in dem Signalkanal, der sich direkt dem Signalkanal anschließt, in dem von den Nachbarfeststationen die Meßsignalbursts zur Mobilstation übertragen worden sind. Die Zeilen 3 - 6 in Fig. 2 zeigen die Lage des Signalkanals innerhalb der verschiedenen TDMA-Rahmen, in denen die Meßsignalbursts von den Nachbarfeststationen ausgesendet werden, und Zeilen 7 (unterer Teil), 8, 9, 10 und 11 zeigen die Lage der Signalkanäle, in denen die Mobilstation die Meßsignalbursts zurücksendet (Zeile 7) bzw. die Feststationen der Nachbarfunkzellen A1, A2, B5, C7 die zurückgesendeten Meßsignalbursts empfangen (Zeilen 8 - 11).

Wie aus den übertragenen Meßsignalbursts die Signallaufzeiten abgeleitet werden, soll an Hand der in den Zeilen 12 - 15 vergrößert und detailliert dargestellten Signalkanäle z.B. der TDMA-Rahmen R1, R2 und R3 erläutert werden.

Die Zeile 12 zeigt noch einmal zusammengefaßt, daß auf einen im Signalkanal $K_x$ von der Feststation der Funkzelle A3 an die Mobilstation MS ausgesendeten Signalburst mit Nutzinformation im darauffolgenden Signalkanal $K_{x+1}$ die Mobilstation MS ihren Signalburst mit Nutzinformation an die Feststation der Funkzelle A3 absetzt. Weiterhin verdeutlicht die Zeile 12, daß im nächsten Signalkanal $K_{x+2}$ jeweils ein Meßsignalburst im Rahmen R1 von der Feststation der Funkzelle A1 und im Rahmen R2 von der Feststation der Funkzelle A2 zur Mobilstation MS übertragen wird. Gleich im Anschluß an diesen Signalkanal $K_{x+2}$, im vorliegenden Beispiel ist es der erste Signalkanal K1 des nächsten Rahmens, sendet die Mobilstation den gleichen Meßsignalburst an die Feststationen der Nachbarfunkzellen A1 bzw. A2 zurück.

Die Zeile 13 ist eine gespreizte Darstellung der Signalkanäle $K_{x+1}$, $K_{x+2}$ und $K_1$ der TDMA-Rahmen R1 bzw. R2.

Der Signalkanal $K_{x+1}$, in welchem Nutzinformation von der Mobilstation MS zur Feststation der Funkzelle A3 übertragen wird, ist folgendermaßen aufgebaut:
Er beginnt mit einem Kanalsynchronwort K-Syn, dem sich ein Adresswort Adr anschließt. Darauf folgt eine sprach- oder datenbegleitende Signalisierung Sig. Diese Siganlisierung, auch Inbandsignalisierung genannt, enthält z.B. Informationen über Gebühreneinheiten, über Sendeleistungseinstellungen, über Zuweisungen zu neuen Teilfrequenzbändern, über Umschaltungen von Sprache auf Daten, Quittierungen und die Anweisung an die Feststationen, sich für die Signallaufzeitmessung auf das dafür vorgesehene Teilfrequenzband umzustellen. Die überwiegende Anzahl der Bits in dem Signalkanal $K_{x+1}$ wird von der eigentlich zu übertragenden Sprach- oder Dateninformation Info belegt. Am Ende des Signalkanals ist ein Bitblock Z für den Ausgleich der unterschiedlichen Laufzeiten der ausgesendeten Signalburst vorgesehen.

Der im folgenden Signalkanal $K_{x+2}$ von der Feststation der Funkzelle A1 ausgesendete Meßsignalburst beginnt, wie die Zeile 14 verdeutlicht, gegenüber dem Anfang des Signalkanals $K_{x+2}$ um eine Zeit $\tau$ und eine Umschaltzeit U verzögert. Die Zeit $\tau$ beruht auf der Laufzeit des von der Mobilstation MS ausgesendeten und von der Feststation der Funkzelle A1 empfangen Signalbursts, auf den sich die Feststation aufsynchronisiert. Die Umschaltzeit U ist bedingt durch die Umschaltung der Feststation auf das erste der zwei für die Laufzeitmessung bestimmten Teilfrequenzbänder. Der Meßsignalburst enthält am Anfang ein Synchronwort Syn, dann die Nummer MS-Nr der zu ortenden Mobilstation MS und die Nummer FS-Nr der Feststation, welche diesen Meßsignalburst aussendet.

In dem gleichen Signalkanal $K_{x+2}$ empfängt die Mobilstation MS den Meßsignalburst, aber zusätzlich nochmals um die Signallaufzeit $\tau$ verzögert, so daß der Meßsignalburst gegenüber dem Beginn des Signalkanals $K_{x+2}$ insgesamt um die Zeit $U+2\tau$ verzögert in der Mobilstation MS angelangt ist (vgl. Zeile 13).

Genau um die Dauer eines Signalkanals versetzt gegenüber dem Beginn des empfangenen Meßsignalbursts sendet die Mobilstation MS den gleichen Meßsignalburst im zweiten der zwei Teilfrequenzbänder wieder aus. Die verbleibende Zeit U' zwischen dem Ende des empfangenen Meßsignalbursts und dem Anfang des wieder zurückgesendeten Meßsignalbursts nutzt die Mobilstation aus, um die im Meßsignalburst übermittelte Mobilstationsnummer MS-Nr mit der eigenen Nummer auf Übereinstimmung zu überprüfen.

Der inzwischen auf das zweite Teilfrequenzband umgeschaltete Meßempfänger der Feststation der Funkzelle A1 empfängt den von der Mobilstation MS zurückgesendeten Meßsignalburst um die Signallaufzeit $\tau$ verzögert (vgl. Zeile 15). Damit entspricht der zeitliche Abstand L zwischen dem Beginn des von dem Meßsender der Feststation ausgesendeten und dem Beginn des von dem Meßempfänger der Feststation wieder empfangenen Meßsignalburst einer Signalkanaldauer zuzüglich der doppelten Signallaufzeit $2\tau$ (vgl. Zeilen 14, 15). In der Feststation liegt nunmehr eine Information über die Signallaufzeit $\tau$ zwischen ihr selbst und der Mobilstation MS vor.

Alle Feststationen der Nachbarfunkzellen geben ihre ermittelte Signallaufzeit $\tau$, sowie u.U. noch andere Qualitätskriterien der Signalverbindung an eine Funkvermittlungsstelle weiter, welche aus all den übermittelten Informationen diejenige Feststation bestimmt, an die die Mobilstation auf Grund der kürzesten Entfernung, guter Übertragungsqualität und noch freier Signalkanäle weitergereicht werden soll.

Durch das angegebene Verfahren ist die Ortsbestimmung einer Mobilstation während der Nutzinformationsübertragung ohne deren Beeinträchtigung möglich. Ferner brauchen die Rahmen und Überrahmen der Feststationen des Netzes nicht synchron zueinander zu sein, ja sogar die Taktfrequenzen können plesiochron sein, da jede Feststation sich vor der Ortsmessung auf den Nutzkanal der zu ortenden Mobilstation erst aufsynchronisiert und Takt sowie Rahmen und Überrahmen während der Übertragung des Meßsignalbursts für die Dauer eines Überrahmens genau genug beibehalten werden können.

**Patentansprüche**

1. Verfahren zur Ortsbestimmung von Mobilstationen innerhalb eines zellularen Mobilfunknetzes, in dem jeder Funkzelle (A1...A7, B1...B7, C1...C7) eine mit den Mobilstationen (MS) Signale austauschende Feststation (FS) zugeordnet ist, wobei von allen Feststationen (FS), welche zu derjenigen gerade mit einer zu ortenden Mobilstaton (MS) in Verbindung stehenden Feststation (FS) benachbart sind, die Empfangsqualität von Signalbursts gemessen wird, die von der betreffenden Mobilstation (MS) ausgesendet worden sind, und dann von den diese Signalbursts mit ausreichender Qualität empfangenden Nachbarfeststationen Signallaufzeitmessungen durchgeführt werden, wonach die Mobilstation (MS) an diejenige Feststation (FS) übergeben wird, für welche die geringste Signallaufzeit zwischen ihr und der Mobilstation (MS) ermittelt worden ist, dadurch gekennzeichnet, daS die Nachbarfeststationen auf ein Teilfrequenzband aus dem gesamten für den Mobilfunk zur Verfügung stehenden Frequenzbereich geschaltet werden, in dem die Mobilstation (MS) mit der Feststation (FS), in deren Funkzelle sie sich gerade aufhält, im Zeitmultiplexbetrieb mit Vielfachzugriff (TDMA-Betrieb) verkehrt und ihre Signalbursts aussendet, welche von den Feststationen (FS) dazu ausgenutzt werden um sich auf das TDMA-Zeitschlitzraster aufzusynchronisieren, daS dann die Signalbursts mit ausreichender Qualität empfangenden Nachbarfeststationen und die Mobilstation (MS) auf ein anderes erstes Teilfrequenzband umgeschaltet werden, in dem Meßsender der Nachbarfeststationen Meßsignalbursts aussenden und diese die Mobilstation (MS) empfängt, daß darauf die Mobilstation (MS) in einem zweiten Teilfrequenzband die empfangenen Meßsignalbursts an die einzelnen Nachbarfeststationen, deren Meßempfänger ebenfalls auf dieses zweite Frequenzband eingestellt sind, zurücksendet, wobei jede Nachbarfeststation ihren Meßsignalburst in ihr zugeordneten TDMA-Zeitschlitzen aussendet bzw. empfängt, und daß für jede Nachbarfeststaion aus der Zeitdifferenz zwischen dem Aussenden und wieder Empfangen des Meßsignalburst die Signallaufzeit ermittelt wird.

2. Verfahren nach Anspruch 1, dadurch gekennzeichnet, daß das TDMA-Zeitschlitzraster aus mehreren in Überrahmen zusammengefaßten Rahmen mit jeweils mehreren blockweise aneinandergereihten Signalkanälen besteht.

3. Verfahren nach Anspruch 1, dadurch gekennzeichnet, daß von den Meßsendern und -empfängern aller Feststationen (FS) des gesamten Mobilfunknetzes und allen Sendern und Empfängern der darin verkehrenden Mobilstationen (MS) die gleichen Teilfrequenzbänder für das Aussenden und Empfangen der Meßsignalbursts benutzt werden.

4. Verfahren nach einem der vorhergehenden Ansprüche, dadurch gekennzeichnet, daß die Feststationen (FS) jeweils ihren Meßsignalburst in einem Signalkanal aussenden, der zu einem Rahmen gehört, dessen Nummer mit der Nummer der jeweiligen Feststation (FS) übereinstimmt, und daß den Feststationen (FS) die Zählweise der Rahmen durch ein von der Mobilstation (MS) in einem Adreßteil eines Signalkanals im ersten Rahmen des Überrahmens angegebenen Zeichens mitgeteilt wird.

5. Verfahren nach einem der vorgehenden Ansprüche, dadurch gekennzeichnet, daS die Feststationen (FS) ihre Meßsignalbursts in einem Signalkanal des ihnen jeweils zugeordneten Rahmens aussenden, der unmittelbar auf den Signalkanal folgt, in dem sie die von der Mobilstation (MS) ausgesendeten Signalbursts empfangen haben, und daß die Mobilstation (MS) in einem Signalkanal der den Feststationen (FS) jeweils zugeordneten Rahmen die Meßsignalbursts zurücksendet, der unmittelbar auf den Signalkanal folgt, in dem die Meßsignalbursts von den Feststationen ausgesendet worden sind.

6. Verfahren nach Anspruch 5, dadurch gekennzeichnet, daß die Feststationen (FS) ihre Meßsignalbursts gegenüber dem Signalkanalbeginn verzögert aussenden.

7. Verfahren nach Ansprch 1, dadurch gekennzeichnet, daß den Nachbarfeststationen vor der Empfangssignalqualitätsmessung eine Kennung der Mobilstation (MS) mitgeteilt wird, welche die Nummer der Mobilstation (MS) und die Nummern der Teilfrequenzbänder und der Signalkanäle enthält, in denen die Mobilstation (MS) mit der ihr augenblicklich zugeordneten Feststation (FS) Nachrichten austauscht.

8. Verfahren nach einem der vorhergehenden Ansprüche, dadurch gekennzeichnet, daS die von den Feststationen (FS) ausgesendeten Meßsignalbursts die Nummer der zu ortenden Mobilstation (MS) und die Nummer der jeweiligen Feststation (FS) enthalten.

**Claims**

1. Method for ascertaining the location of mobile stations within a cellular mobile radio network, in which each radio cell (A1 to A7, B1 to B7, C1 to C7) is associated with a fixed station (FS) exchanging signals with the mobile stations (MS), wherein the reception quality of signal bursts, which have been emitted by that mobile station (MS), the location of which is just to be ascertained, is measured by all fixed stations (FS, which are adjacent to the fixed station (FS) standing in communication with the mobile station (MS) concerned, and signal transit time measurements are then performed by the adjacent fixed stations receiving these signal bursts with adequate quality, whereafter the mobile station (MS) is transferred to that fixed station (FS), for which the lowest signal transit time has been ascertained between it and the mobile station (MS), characterised thereby, that the adjacent fixed stations are switched to a partial frequency band out of the entire frequency range standing at disposal for the mobile radio, in which band the mobile station (MS) communicates in time-division operation with multiple access (TDMA operation) with the fixed station (FS), in the radio cell of which it is just staying, and emits its signal bursts which are utilised by the fixed stations (FS) for the purpose of synchronising themselves to the TDMA time slot raster, that the adjacent fixed stations receiving the signal bursts with adequate quality and the mobile station (MS) are then switched over to another first partial frequency band, in which measurement transmitters of the adjacent fixed stations emit measurement signal bursts and the mobile station (MS) receives these, that the mobile station (MS) thereupon in a second partial frequency band sends the received measurement signal bursts back to the individual adjacent fixed stations, the measurement receivers of which have likewise been set to this second frequency band, wherein each adjacent fixed station respectively emits and receives its measurement signal burst in TDMA time slots allocated to it, and that the signal transit time is ascertained for each adjacent fixed station from the time difference between the emission and the reception back of the measurement signal burst.

2. Method according to claim 1, characterised thereby, that the TDMA time slot raster consists of several frames combined in superframes and each with several signal channels placed one against the other in blocks.

3. Method according to claim 1, characterised thereby, that the same partial frequency bands are utilised for the emission and the reception of measurement signal bursts by the measurement transmitters and the measurement receivers of all fixed stations (FS) of the entire mobile radio network and all transmitters and receivers of the mobile stations (MS) moving therein.

4. Method according to one of the preceding claims, characterised thereby, that the fixed stations (FS) emit their measurement signal burst each time in a signal channel which belongs to a frame, the number of which agrees with the number of the respective fixed station (FS), and that the manner of counting of the frames is communicated to the fixed stations (FS) by a mark indicated by the mobile station (MS) in an address part of a signal channel in the first frame of the superframe.

5. Method according to one of the preceding claims, characterised thereby, that the fixed stations (FS) emit their measurement signal bursts in a signal channel of the frame respectively allocated to them, which channel follows directly on the signal channel, in which they have received the signal bursts emitted by the mobile station (MS), and that the mobile station (MS) sends the measurement signal bursts back in a signal channel of the frames respectively allocated to the fixed stations (FS), which channel follows directly on the signal channel in which the measurement signal bursts have been emitted by the fixed stations.

6. Method according to claim 5, characterised thereby, that the fixed stations (FS) emit their measurement signal bursts with a delay relative to the beginning of the signal channel.

7. Method according to claim 1, characterised thereby, that an identification of the mobile station (MS), which contains the number of the mobile station (MS) and the numbers of the partial frequency bands and of the signal channels, in which the mobile station (MS) exchanges communications with the fixed station (FS) associated with it at the moment, is communicated to the adjacent fixed stations before the measurement of reception signal quality.

8. Method according to one of the preceding claims, characterised thereby, that the measurement signal bursts emitted by the fixed stations (FS) contain the number of the mobile station (MS), the location of which is to be ascertained, and the number of the respective fixed station (FS).

## Revendications

1. Procédé pour déterminer la position de stations mobiles à l'intérieur d'un réseau cellulaire de radiocommunication mobile, dans lequel une station fixe (FS), échangeant des signaux avec les stations mobiles (MS), est coordonnée à chaque cellule radioélectrique (A1...A7, B1...B7, C1...C7), selon lequel toutes les stations fixes (FS) voisines de la station fixe (FS) qui est à ce moment en liaison avec une station mobile (MS) dont la position est à déterminer, mesurent la qualité de réception de paquets de signaux ayant été émis par la station mobile (MS) concernée, et selon lequel les stations fixes voisines recevant ces paquets de signaux avec une qualité suffisante, effectuent ensuite des mesures des temps de propagation des signaux, après lesquelles la station mobile (MS) est transférée à la station fixe (FS) pour laquelle a été constaté le temps de propagation de signaux le plus court entre elle et la station mobile (MS), caractérisé en ce que les stations fixes mobiles sont commutées sur une bande de fréquences partielle, faisant partie de toute la gamme de fréquences disponible pour la radiocommunication mobile, dans laquelle la station mobile (MS) communique, dans le mode d'accès multiple à répartition dans le temps (mode AMRT), avec la station fixe (FS) dans la cellule radio-électrique de laquelle elle se trouve à ce moment, et dans laquelle elle émet ses paquets de signaux, lesquels sont utilisés par les stations (FS) pour se synchroniser sur la grille de tranches de temps (AMRT), que les stations fixes voisines recevant les paquets de signaux avec une qualité suffisante et la station mobile (MS) sont commutées ensuite sur une autre ou première bande de fréquences partielle, dans laquelle des émetteurs de mesure des stations fixes voisines émettent des paquets de signaux de mesure et dans laquelle ces paquets de signaux sont reçus par la station mobile (MS), que la station mobile (MS) renvoie après cela les paquets de signaux de mesure reçus dans une deuxième bande de Fréquences partielle aux différentes stations fixes voisines, dont les récepteurs de mesure sont réglés également sur cette deuxième bande de fréquences, dans un processus où chaque station fixe voisine émet ou reçoit son paquet de signaux de mesure dans des tranches de temps AMRT qui lui sont coordonnées, et que le temps de propagation des signaux est déterminé pour chaque station fixe voisine d'après la différence temporelle entre l'émission et la réception en retour du paquet de signaux de mesure.

2. Procédé selon la revendication 1, caractérisé en ce que la grille de tranches de temps AMRT est composée de plusieurs trames rassemblées en multitrames et présentant chacune plusieurs voies de signalisation accolées par blocs.

3. Procédé selon la revendication 1, caractérisé en ce que les émetteurs et récepteurs de mesure de toutes les stations fixes (FS) de l'ensemble du réseau de radiocommunication mobile, ainsi que tous les émetteurs et récepteurs des stations mobiles (MS) qui y ont des communications, utilisent les mêmes bandes de fréquences partielles pour l'émission et la réception des paquets de signaux de mesure.

4. Procédé selon une des revendications précédentes, caractérisé en ce que les stations fixes (FS) émettent chaque fois leur paquet de signaux de mesure dans une voie de signalisation appartenant à une trame dont le numéro correspond au numéro de la station fixe (FS) concernée et que les stations fixes (F) sont informées du mode de comptage des trames par un caractère indiqué par la station mobile (MS) dans une partie d'adresse d'une voie de signalisation de la première trame de la multitrame.

5. Procédé selon une des revendications précédentes, caractérisé en ce que les stations fixes (FS) émettent leurs paquets de signaux de mesure dans une voie de signalisation de la trame qui leur est coordonnée, qui suit immédiatement la voie de signalisation par laquelle elles ont reçu les paquets de signaux émis par la station mobile (MS), et que la station mobile (MS) renvoie les paquets de signaux de mesure aux stations fixes (FS) respectives par une voie de signalisation de la trame coordonnée qui suit immédiatement la voie de signalisation par laquelle les paquets de signaux de mesure ont été émis par les stations fixes.

6. Procédé selon la revendication 5, caractérisé en ce que les stations fixes (FS) émettent leurs paquets de signaux de mesure avec du retard par rapport au début de la voie de signalisation.

**7.** Procédé selon la revendication 1, caractérisé en ce, avant la mesure de la qualité des signaux reçus, les stations fixes voisines sont informées d'une identification de la station mobile (MF), laquelle contient le numéro de la station mobile (MS) et les numéros des bandes de fréquences partielles et des voies de signalisation par lesquelles la station mobile (MS) échange des messages avec la station fixe (FS) qui lui est coordonnée à ce moment.

**8.** Procédé selon une des revendications précédentes, caractérisé en ce que les paquets de signaux de mesure émis par les stations fixes (FS) contiennent le numéro de la station mobile (MS) dont la position est à déterminer et le numéro de la station fixe (FS) concernée.

FIG.1

EP 0 210 396 B1

FIG.2